# EUROPÄISCHE PATENTSCHRIFT

(11) **EP 2 642 314 B1**
(45) Veröffentlichungstag und Bekanntmachung des Hinweises auf die Patenterteilung: **03.12.2014**
(21) Anmeldenummer: 13157763.7
(22) Anmeldetag: 05.03.2013
(51) Int. Cl.: G01S 7/497, G01S 17/42, G01S 7/481

(54) **Optoelektronischer Sensor und Verfahren zum Testen der Lichtdurchlässigkeit einer Frontscheibe**
Optoelectronic sensor and method for testing the transparency of a windshield
Capteur optoélectronique et procédé destiné à tester la perméabilité à la lumière d'une vitre frontale

(30) Priorität: 21.03.2012 DE 102012102395
(43) Veröffentlichungstag der Anmeldung: 25.09.2013
(73) Patentinhaber: SICK AG, 79183 Waldkirch (DE)
(72) Erfinder: Krämer, Joachim, 79249 Merzhausen (DE)
(74) Vertreter: Hehl, Ulrich

(56) Entgegenhaltungen:
- DE-A1-102008 032 216
- DE-C1- 10 025 511

## Beschreibung

Die Erfindung betrifft einen optoelektronischen Sensor mit einer umlaufenden Frontscheibe und ein Verfahren zum Testen der Lichtdurchlässigkeit einer umlaufenden Frontscheibe eines solchen Sensors nach dem Oberbegriff von Anspruch 1 beziehungsweise 15.

Laserscanner werden in vielen Anwendungen zur Objekterfassung eingesetzt. Ein von einem Laser erzeugter Lichtstrahl überstreicht mit Hilfe einer Ablenkeinheit periodisch eine Überwachungsebene. Dazu dient meist ein rotierender Spiegel als Ablenkeinheit, die innerhalb einer festen Ebene einen Sichtbereich von bis zu 360° in diskreten Winkelschritten abtastet. Das Sendelicht wird an Objekten in der Überwachungsebene remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Wenn der Überwachungsbereich eine Abtastebene ist, sind mit diesen Polarkoordinaten sämtliche möglichen Objektpositionen zweidimensional erfasst. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren misst der Laserscanner die Laufzeit, bis ein ausgesandter Lichtpuls wieder empfangen wird.

In der Sicherheitstechnik werden Laserscanner zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine von Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen.

Sensoren, die in der Sicherheitstechnik eingesetzt werden, müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung oder speziell Überwachung der Verschmutzung optischer Bauteile und/oder Vorsehen von einzelnen Testzielen mit definierten Reflexionsgraden, die unter den entsprechenden Scanwinkeln erkannt werden müssen.

Zum Schutz vor Umgebungseinflüssen sind Laserscanner üblicherweise mit einer Frontscheibe ausgestattet, welche einen Teil des Gehäuses darstellt und die Abtaststrahlen passieren lässt. Damit diese Frontscheibe die optische Messung nicht beeinträchtigt, sind zwei Aspekte zu beachten.

Zum einen entsteht, da die Frontscheibe zwei optische Grenzflächen bildet, eine Reflexion des Sendestrahls, die sich störend auf die Messung auswirken kann. Der herkömmliche Optikaufbau eines Laserscanners sieht eine koaxiale Anordnung von Sende- und Empfangsstrahlengang vor. Um zu vermeiden, dass der Frontscheibenreflex den Empfänger trifft, ist die Frontscheibe schräg gestellt. Dadurch wird der Frontscheibenreflex nach oben weggespiegelt und verläuft sich in einer optischen Falle. Die Vorstellung einer schräg gestellten Scheibe bezieht sich auf eine Schnittdarstellung in einer festen Winkelstellung der Ablenkeinheit. Um in jeder Stellung der Drehbewegung eine schräge Fläche zu präsentieren, ist die Frontscheibe als entsprechender Rotationskörper ausgebildet, also als Kegelstumpf. Die definierte Umlenkung des Frontscheibenreflexes in eine optische Falle mit einer derartigen Formgebung der Frontscheibe setzt voraus, dass der Sendestrahl stets auf gleicher Höhe auftrifft. Ist diese Bedingung aber nicht erfüllt, so wird entweder viel Bauraum für eine ausgedehnte optische Falle benötigt, oder es kann doch Streulicht aus dem Frontscheibenreflex in den Empfangspfad gelangen.

Zum zweiten muss nach den oben genannten Normen für einen funktionell einwandfreien und sicheren Betrieb fortwährend geprüft werden, ob die Frontscheibe Kratzer, Staub oder sonstige Beeinträchtigungen aufweist. Dies erfolgt üblicherweise durch eine Verschmutzungsmessung, bei der ein Testlichtstrahl die Frontscheibe transmittiert. Bei Einsatz in einer Umgebung mit Umwelteinflüssen wie Nebel oder starken Temperaturen, vornehmlich im Außenbereich, aber auch in der Nähe von entsprechenden Prozessen im Innenbereich, kann sich zudem ein Beschlag auf der Außenseite der Frontscheibe bilden. Auch dies kann zu einer Verschlechterung der Abbildung des von dem Abtaststrahl erzeugten Empfangslichtflecks und dadurch zu einem gefahrbringenden Ausfall führen. Da die Beschlagbildung durch eine herkömmliche Transmissionsmessung nicht zuverlässig detektiert werden kann, wird sie herkömmlich durch Beheizen der Frontscheibe verhindert.

Bei einem Laserscanner mit kegelstumpfförmiger Frontscheibe nach dem Stand der Technik erfolgt die Transmissionsmessung, indem die Frontscheibe an mehreren Stellen mit jeweils einem Paar von Testlichtsendern und zugeordnetem Testlichtempfänger durchstrahlt wird. Der Testlichtsender kann dabei außerhalb und der Testlichtempfänger innerhalb der Frontscheibe angeordnet sein, so dass die Frontscheibe direkt auf der gemeinsamen Sichtlinie liegt. Bekannt ist auch, einen Reflektor zu verwenden und Testlichtsender wie Testlichtempfänger gemeinsam auf der gleichen Seite bezüglich der Frontscheibe anzuordnen. Die Frontscheibe wird dann von dem Testlicht zweimal durchstrahlt. In einer weiteren Alternative liegen ein Reflektor und ein Testlichtempfänger im Sensorinneren, so dass die Frontscheibe wieder nur einfach durchstrahlt wird. Um Einflüsse wie Temperatur oder Alterungserscheinungen der Testlichtsender und Testlichtempfänger zu erkennen, sind Referenzpfade vorgesehen, auf denen das Testlicht die Frontscheibe nicht durchdringt. Damit genügend Informationen über die Frontscheibe etwa in einem relevanten Winkelbereich von 270° gewonnen werden, sind in einer bekannten Ausführungsform sieben Testlichtpfade und zwei Referenzpfade notwendig. Somit werden insgesamt 9 LEDs, 9 Photodioden sowie eine Platine zur Auswertung benötigt, die entsprechend zu Bauraumbedarf und Herstellkosten beitragen.

Aus der europäischen Patentanmeldung EP 2 447 733 ist ein Laserscanner mit einer besonderen Form der Frontscheibe bekannt. Die Frontscheibe besitzt durch ihre Krümmung fokussierende Eigenschaften, so dass ein Frontscheibenreflex unabhängig von der Auftreffhöhe des Sendestrahls in einen Fokus abgelenkt wird. Diese Anmeldung trägt aber zur Frage der Überprüfung der Transmissionseigenschaften der Frontscheibe nicht Neues bei.

Es ist daher Aufgabe der Erfindung, den Aufwand für die Überprüfung der Frontscheibe zu verringern.

Diese Aufgabe wird durch einen optoelektronischen Sensor mit einer umlaufenden Frontscheibe und ein Verfahren zum Testen der Lichtdurchlässigkeit einer umlaufenden Frontscheibe eines solchen Sensors gemäß Anspruch 1 beziehungsweise 15 gelöst. Dabei geht die Erfindung von dem Grundgedanken aus, die fokussierenden beziehungsweise abbildenden Eigenschaften der Grenzflächen einer besonders gekrümmt ausgebildeten Frontscheibe eines optoelektronischen Sensors für eine vereinfachte Verschmutzungsmessung auszunutzen. Diese Frontscheibe weist sowohl in Umlaufrichtung als auch senkrecht dazu in Höhenrichtung eine Krümmung und dadurch einen Fokusbereich auf, in dem an der Innenseite der Frontscheibe auftreffendes Licht zum Teil durch Reflexion gebündelt wird. Genaugenommen wird das Licht an der Innenseite der Frontscheibe zweifach reflektiert, nämlich an den beiden Grenzflächen einmal bei Eintritt in das Material der Frontscheibe und noch einmal beim Austritt. Dabei kann die umlaufende Frontscheibe mit diesen Krümmungseigenschaften und dem zugehörigen Fokusbereich den vollen 360°-Bereich oder nur einen bestimmten Winkelabschnitt davon umfassen.

Ein Testlichtsender, ein Reflektor und ein Testlichtempfänger spannen in dieser Reihenfolge einen Testlichtpfad auf, und das in dem Testlichtempfänger registrierte Testlicht wird auf einen Abfall geprüft, der auf ein nicht mehr tolerierbares Nachlassen der Lichtdurchlässigkeit der Frontscheibe hinweist. Der Testlichtempfänger und der Reflektor sind nun derart auf derselben Seite der Frontscheibe angeordnet, dass der Testlichtpfad von dem Reflektor über eine Reflexion an der Innenseite der Frontscheibe zu dem Testlichtempfänger führt. Die Innenseite der Frontscheibe mit ihren durch die Krümmung entstehenden Abbildungseigenschaften wird also für den Testlichtpfad genutzt. Dabei ist auch möglich, dass ein Testlichtsender, ein Reflektor beziehungsweise ein Testlichtempfänger oberhalb oder unterhalb der Frontscheibe angeordnet ist; "dieselbe Seite" beschreibt also einen Raumbereich, der auch durch eine Verlängerung der Frontscheibe definiert sein kann. Wichtig ist nur, dass der Testlichtpfad mindestens einmal die Frontscheibe durchdringt, beispielsweise indem der Testlichtsender außerhalb der Frontscheibe und Testlichtempfänger und Reflektor innerhalb der Frontscheibe angeordnet sind. Da eine punktuelle Messung mit nur einem Testlichtpfad meist nicht ausreicht, um die Verschmutzung der ganzen Frontscheibe zu beurteilen, sind häufig mehrere Testlichtsender vorgesehen. Wie im Weiteren noch erläutert, muss dabei aber die Anzahl der Testlichtempfänger wegen der Ausnutzung der Krümmungseigenschaften der Frontscheibe nicht oder zumindest nicht im gleichen Maße erhöht werden.

Die Erfindung hat den Vorteil, dass die Herstellkosten und der benötigte Bauraum für die Verschmutzungsmessung deutlich reduziert werden. Dabei wird dennoch zuverlässig und normgerecht erkannt, ob die Frontscheibe noch eine sichere Funktion des Sensors zulässt.

Der Sensor weist bevorzugt einen Lichtsender zum Aussenden eines Sendelichtstrahls in eine Überwachungsebene, einen Lichtempfänger zum Erzeugen eines Empfangssignals aus dem von Objekten in der Überwachungsebene remittierten Lichtstrahl und eine um eine Drehachse drehbare Ablenkeinheit zur periodischen Ablenkung des ausgesandten Lichtstrahls auf, um im Verlauf der Drehung die Überwachungsebene abzutasten, wobei die Auswertungseinheit weiterhin dafür ausgebildet ist, aus dem Empfangssignal Informationen über Objekte in der Überwachungsebene zu gewinnen. Die Überwachungsebene wird auch als Abtastebene oder Scanebene bezeichnet. Wenn die Ablenkeinheit rotiert, steht die Überwachungsebene senkrecht zur Drehachse. Es ist auch möglich, den Sensor zyklisch gegenüber der Drehachse zu verkippen. Dann wird anstelle einer Ebene ein dreidimensionaler Raumbereich überwacht, der geometrisch das Komplement eines Doppelkegels ist. Auch ein solcher Raumbereich wird im Rahmen dieser Beschreibung vereinfachend als Überwachungsebene bezeichnet, und eine senkrechte Orientierung zu diesem Raumbereich bezieht sich auf die Mittenebene. Der remittierte Lichtstrahl wird meist über dieselbe Ablenkeinheit geführt wie der ausgesandte Lichtstrahl. Häufig dient dann ein bestimmter Bereich der Ablenkeinheit der Umlenkung des Sendestrahls und die übrige Ablenkeinheit der Umlenkung des remittierten Lichts zu dem Lichtempfänger. Prinzipiell ist aber auch möglich, jeweils eine eigene Ablenkeinheit zu verwenden.

Der Testlichtempfänger ist bevorzugt nahe der Drehachse und mit seiner optischen Achse parallel dazu so angeordnet, dass der Testlichtpfad von der Innenseite der Frontscheibe über die Ablenkeinheit zu dem Testlichtempfänger führt. Somit ist die Ablenkeinheit immer einem gerade zu prüfenden Reflektor beziehungsweise Testlichtsender zugewandt. Das führt dazu, dass bei mehreren Testlichtpfaden deren hintere Anteile nach der Ablenkeinheit besonders kompakt beieinander liegen.

Die Auswertungseinheit ist bevorzugt dafür ausgebildet, den Testlichtsender mit der Drehung synchronisiert zu aktivieren. Da ein über die Ablenkeinheit geführter Testlichtpfad nur bei richtiger Orientierung der Ablenkeinheit vollständig ist, wird so sichergestellt, dass nur der jeweils passende Testlichtsender aktiv ist und umgekehrt das Testlicht eines aktiven Testlichtsenders auch einen vollständigen Testlichtpfad vorfindet. Alternativ zu einer Synchronisierung können die Testlichtsender aber auch mit beliebigem Zeitverhalten aktiviert werden, dann entscheidet die Orientierung der Ablenkeinheit darüber, ob das Testlicht in dem Testlichtempfänger ankommt.

Dem Lichtempfänger ist bevorzugt eine Empfangsoptik vorgeordnet, und die Empfangsoptik ist auch Teil des Testlichtpfades zwischen Ablenkeinheit und Testlichtempfänger. Eine solche Empfangsoptik benötigt der Sensor ohnehin in praktisch allen Ausführungsformen. Aufgrund der erfindungsgemäßen Strahlführung des Testlichts kann diese Empfangsoptik auch für die Testlichtpfade genutzt werden.

Der Reflektor ist vorzugsweise bei dem Fokusbereich der Frontscheibe angeordnet, weist jedoch einen Versatz zu dem Fokusbereich auf. Die Anordnung in der Nähe des Fokusbereichs stellt sicher, dass das Testlicht am Ende des Testlichtpfades in die Nähe einer bekannten Position gelangt, vorzugsweise im Zentrum des Sensors beziehungsweise dort, wo sich auch Lichtsender und Lichtempfänger befinden. Ist zugleich ein gewisser Versatz vorgesehen, so fällt das Testlicht nicht in den Lichtempfänger, wo es gegenüber dem eigentlichen Signal des Sensors ohne Zusatzmaßnahmen als Störlicht die Messung beeinflusst.

Vorzugsweise ist eine Vielzahl von Reflektoren vorgesehen, die auf einer Ebene parallel zu der Überwachungsebene in Umfangsrichtung verteilt angeordnet sind, wobei jeder Reflektor einen Versatz zu dem Fokusbereich und gegenüber der radialen Richtung zu dem Fokusbereich einen unterschiedlichen Winkelversatz aufweist, so dass das von mehreren Reflektoren reflektierte Testlicht über die Frontscheibe auf einen gemeinsamen Testlichtempfänger geführt wird. Zu der Vielzahl von Reflektoren wird eine entsprechende Vielzahl von Testlichtsendern benötigt, um eine Vielzahl von Testlichtpfaden aufzuspannen. Dagegen ist aufgrund dieser besonderen Anordnung der Reflektoren nicht erforderlich, auch eine entsprechende Vielzahl von Testlichtempfängern vorzusehen. Dadurch können Bauelemente eingespart und die Frontscheibe an mehr Durchstoßpunkten getestet werden als Testlichtempfänger vorhanden sind. Insbesondere ist es möglich, die Reflektoren derart anzuordnen, dass sämtliche Testlichtpfade in ein und demselben Testlichtempfänger enden, oder zwei Gruppen zu bilden, deren Testlichtpfade in jeweils einem gemeinsamen Testlichtempfänger und damit insgesamt in nur zwei Testlichtempfängern enden.

Der Testlichtsender weist bevorzugt eine Testlichtsenderoptik auf, wobei die Testlichtsenderoptik einstückig mit einem Sockel der Frontscheibe ausgebildet ist. Durch eine Testsenderoptik entstehen entsprechend kollimierte oder, beispielsweise durch eine Blende, anders strahlgeformte Testlichtstrahlen. Damit lässt sich der Durchstrahlbereich auf der Frontscheibe und dadurch der Verschmutzungstest weiter optimieren. Bei einstückiger Ausbildung mit einem Sockel der Frontscheibe ist die Herstellung und Justierung solcher Testsenderoptiken besonders einfach. Dazu können beispielsweise entsprechende Linsen in den Sockel eingespritzt sein.

Mehrere Testlichtempfänger sind bevorzugt auf derselben Platine untergebracht. Durch die erfindungsgemäße Ausführung der Testlichtpfade können anders als im Stand der Technik die Testlichtempfänger in sehr große räumliche Nähe gebracht werden. Damit ist die Voraussetzung für eine bauraum- und kostensparende gemeinsame Platine einiger oder sogar aller Testlichtempfänger möglich. Das kann sogar die Platine des Lichtempfängers sein, so dass für den Lichtdurchlässigkeitstest gar keine zusätzliche Platine benötigt wird.

Der Lichtsender und der Testlichtsender sind bevorzugt dafür ausgebildet, Licht mit voneinander unterscheidbaren Modulations- oder Spektraleigenschaften auszusenden. Wenn dann die Anordnung der Testlichtpfade und sonstige Maßnahmen nicht ausreichend verhindern oder sogar gezielt bewirken, dass Testlicht in den Lichtempfänger gelangt, kann es aufgrund der unterschiedlichen Eigenschaften von dem eigentlichen Messsignal unterschieden werden. Damit werden Störlichteffekte des Testlichts auf das Messsignal unterdrückt.

Der Reflektor ist bevorzugt für Testlicht selektiv und in dem Fokusbereich angeordnet, wobei der Lichtempfänger zugleich als Testlichtempfänger ausgebildet ist. Bei dieser Ausführungsform wird sogar ganz gezielt dafür gesorgt, dass das Testlicht in den Lichtempfänger gelangt. Durch die selektive Reflexion wird verhindert, dass Streulicht des Lichtsenders über die Testlichtpfade in den Lichtempfänger gelangt. Bei dieser Anordnung werden Testlichtempfänger durch eine Doppelfunktion des Lichtempfängers ersetzt, wobei im Grenzfall gar kein eigener Testlichtempfänger benötigt wird.

Mindestens ein Referenzlichtsender ist vorzugsweise derart angeordnet, dass sein Referenztestlicht auf einen zugehörigen Reflektor trifft, ohne die Frontscheibe zu durchdringen. Der Referenzlichtsender ist vorzugsweise baugleich zu dem Testlichtsender, und sein Lichtpfad verläuft im Wesentlichen gleich mit dem Unterschied, dass es die Frontscheibe gerade nicht transmittiert. Damit bleibt das Referenztestlicht unbeeinflusst von Beeinträchtigungen der Frontscheibe und kann zum Ausgleich von sonstigen Effekten wie durch Temperatur oder Alterung genutzt werden. Analog den Testlichtpfaden kann auch der Reflektor des Referenzlichtsenders mit einem geeigneten Versatz gegenüber dem Fokusbereich angeordnet werden, so dass das Referenztestlicht gemeinsam mit Testlicht von mindestens einem Testlichtsender auf einen Testlichtempfänger fällt. Das hat nicht nur den Vorteil, dass ein eigener Referenzlichtempfänger eingespart werden kann, sondern man referenziert auf diese Weise genauer, nämlich direkt auf den zu testenden und nicht lediglich einen baugleichen Testlichtempfänger.

In dem Fokusbereich ist bevorzugt mindestens ein Beschlagtestempfänger angeordnet, wobei die Auswertungseinheit dafür ausgebildet ist, anhand eines Abfalls eines von der Frontscheibe in den Beschlagtestempfänger reflektierten Anteils eines Sendelichtstrahls des Sensors eine Beschlagbildung auf der Frontscheibe zu erkennen. Ein Beschlag bildet sich durch feuchte Luft und Temperaturänderungen und damit vornehmlich im Außenbereich (Outdoor-Scanner). Diese Ausführungsform befasst sich zwar auch mit einer Beeinträchtigung der Lichtdurchlässigkeit der Frontscheibe. Allerdings wird auf eine gänzlich andere Weise getestet als in den übrigen Ausführungsformen. Es sind dafür keine Testlichtsender, Reflektoren und Testlichtempfänger sowie keine entsprechende Auswertung erforderlich. Stattdessen wird der Frontscheibenreflex des Lichtsenders mit dem Beschlagstestempfänger gemessen.

Der Sensor ist bevorzugt als entfernungsmessender Laserscanner ausgebildet, indem in der Auswertungseinheit die Lichtlaufzeit zwischen Aussenden und Empfang des Lichtstrahls und daraus die Entfernung eines Objekts bestimmbar ist, wobei eine Winkelmesseinheit vorgesehen ist, mittels derer die Winkelstellung der Ablenkeinheit erfassbar ist, so dass für erfasste Objekte in der Überwachungsebene zweidimensionale Positionskoordinaten zur Verfügung stehen. Damit wird eine vollständige Positionserfassung innerhalb der Überwachungsebene möglich. Zusätzlich können bei Bedarf auch Objektkonturen vermessen werden.

Vorteilhafterweise ist der Sensor als Sicherheitsscanner mit einem Sicherheitsausgang ausgebildet, indem in der Auswertungseinheit bestimmbar ist, ob sich ein Objekt in einem Schutzfeld innerhalb der Überwachungsebene befindet, und daraufhin ein sicherheitsgerichtetes Abschaltsignal über den Sicherheitsausgang ausgebbar ist. In sicherheitstechnischer Anwendung ist das Ausschließen von Störungen durch die Frontscheibe besonders wichtig, weil Gesundheit und Leben von Personen von der zuverlässigen Funktionsfähigkeit abhängen.

Die Testlichtpfade nutzen die Krümmungseigenschaften der Frontscheibe aus. Anstelle eines Kegelstumpfes ist die Frontscheibe vorzugsweise als Freiformfläche ausgebildet. Dabei ist eine insbesondere konvexe Krümmung nicht nur in Umlaufrichtung wie bei einem Kegelstumpf, sondern auch senkrecht dazu in einer Höhenrichtung vorgesehen. Diese Krümmung dient auch dazu, einen Frontscheibenreflex von aus dem Sensor austretendem Sendelicht unabhängig von der Auftreffhöhe auf der Frontscheibe definiert in den Fokusbereich zu lenken. Somit sind die Lichtwege des Frontscheibenreflexes und des Testlichts über weite Strecken gleich mit umgekehrter Laufrichtung. Dies wird noch unterstützt, wenn eine Sendelinse und eine Empfangslinse des Sensors untereinander ähnliche Brennweiten haben.

Die Frontscheibe bildet bevorzugt einen Rotationskörper bezüglich einer zentralen Achse senkrecht zu der Überwachungsebene, wobei die zentrale Achse insbesondere eine Drehachse der Ablenkeinheit ist. Ein solcher Rotationskörper ist aber nicht notwendig auch rotationssymmetrisch, da anstelle eines 360°-Sichtbereichs auch kleinere Sichtbereiche von beispielsweise 270°, 180° oder andere Winkelbereiche möglich sind. Dabei gibt es dann Winkelbereiche, in denen der Sensor Totzonen aufweist, die für eine Montage an einer Wand, interne Leitungsführung oder Elektronik oder ein Testziel zur Überprüfung des Lichtsenders verwendet werden kann.

Die Richtung senkrecht zu der Überwachungsebene kann zur sprachlichen Vereinfachung als Höhenrichtung bezeichnet werden. Die Krümmung der Frontscheibe nimmt vorzugsweise mit der Höhe monoton zu oder monoton ab. Dadurch ist auch eine durchgehende Krümmung in Höhenrichtung vorgesehen. Andererseits sind auch plane Zwischenbereiche oder Facetten denkbar, die gleichsam einer diskrete Näherung einer durchgehenden Krümmung mit Polygonflächen entspricht. Noch bevorzugter ist der Krümmungsverlauf streng monoton, so dass also sphärische Teilbereiche vermieden sind. Eine besonders geeignete derartige Krümmung führt zu einer kelchförmig gekrümmten Frontscheibe.

Vorteilhafterweise steht jede Sekante, die durch einen Schnitt der Frontscheibe senkrecht zu der Überwachungsebene verläuft, schräg zu der Überwachungsebene. Das gilt damit insbesondere auch für diejenige Sekante, die durch die obere und untere Kante der Frontscheibe verläuft. Die gekrümmte Kontur der Frontscheibe ist somit als Ganze aus der Orthogonalen zur Überwachungsebene verkippt. Die Frontscheibe steht an keinem Punkt senkrecht zu dem Sendestrahl, so dass der Frontscheibenreflex stets aus dem Strahlengang nach oben oder unten weggespiegelt wird. Alternativ zu einer Definition über Sekanten kann man es auch so ausdrücken, dass der größtmögliche in die gekrümmte Frontscheibe eingeschriebene Körper ohne Krümmung in Höhenrichtung ein Kegelstumpf mit schrägen Wänden und kein Kreiszylinder mit senkrechten Wänden ist.

Die Frontscheibe weist bevorzugt die Form eines Hohlspiegels auf, der Reflexionen des ausgesandten Lichtstrahls an der Frontscheibe unabhängig von der Höhenlage gegenüber der Überwachungsebene in den umlaufenden Fokusbereich ablenkt. Nur bei Betrachtung einer festen Winkelstellung entsteht ein echter Fokuspunkt. Über die unterschiedlichen Winkelstellungen wird daraus ein als der umlaufende Fokusbereich bezeichneter Ring von Fokuspunkten. Der umlaufende Fokusbereich ist vorzugsweise oberhalb oder unterhalb der Frontscheibe, jedenfalls oberhalb oder unterhalb des Strahlengangs von Lichtsender und Lichtempfänger des Sensors angeordnet. Damit werden Störungen verhindert.

Die Frontscheibe weist bevorzugt in einem Schnitt senkrecht zu der Überwachungsebene einen Abschnitt einer Parabel, einer Hyperbel, einer Ellipse oder einer Asphäre auf. Dies sind besondere Ausprägungen der erfindungsgemäßen Krümmung mit den gewünschten Fokussierungseigenschaften. Räumlich entsteht daraus bei einer als Rotationskörper geformten Frontscheibe ein Ausschnitt eines Rotationsparaboloiden, -hyperboloiden oder -ellipsoiden. Der Ausschnitt kann dabei axial oder außeraxial sein, d. h. charakteristische Punkt wie Scheitelpunkte, Brennpunkte oder dergleichen einschließen oder nicht.

Der Sensor weist bevorzugt eine optische Falle auf, um Reflexionen des ausgesandten Lichtstrahls an der Frontscheibe zumindest teilweise zu absorbieren. Die optische Falle ist noch bevorzugter als Rotationskörper ausgebildet und in dem Fokusbereich angeordnet. Damit genügt eine geringe Ausdehnung der optischen Falle, um die Frontscheibenreflexe unabhängig von der Höhenlage und Winkellage des Sendestrahls aufzufangen. Der Rotationskörper erstreckt sich vorzugsweise über denselben Winkelbereich wie die Frontscheibe. Damit wirkt die optische Falle überall in Umfangsrichtung der Frontscheibe über den gesamten Sichtbereich des Sensors. Die optische Falle kann beispielsweise als Blende mit einer Öffnung in dem Fokusbereich der Frontscheibe und mit einem Hohlraum ausgebildet sein. Die Falle fängt damit ganz gezielt mit ihrer Blende das Licht des Frontscheibenreflexes ein. Innen weist die optische Falle vorzugsweise ein lichtschluckendes und/oder lichtverteilendes Material auf, damit das Licht die optische Falle nicht mehr oder nur noch zu einem geringen Teil verlassen kann. Als Material eignet sich beispielsweise ein schwarzer Anstrich, schwarzer Samt oder eloxiertes Aluminium.

Lichtsender und Lichtempfänger sind bevorzugt nicht koaxial zueinander angeordnet. Beispielsweise stimmt die optische Achse des Lichtempfängers im Wesentlichen mit der Drehachse der Ablenkeinheit überein, und die optische Achse des Lichtsenders ist dazu parallel versetzt. Bei einer solchen Anordnung ergibt sich eine Auf- und Abbewegung des Sendestrahls, weil der Sendestrahl nicht zentral auf die Ablenkeinheit fällt und somit in Abhängigkeit von der Winkelstellung ein Höhenversatz entsteht. Wegen der Krümmung der Frontscheibe wird dennoch der Frontscheibenreflex zuverlässig und in definierter Richtung weggespiegelt, so dass er beispielsweise in einer optischen Falle absorbiert werden kann. Die nicht koaxiale Anordnung ist zugleich besonders vorteilhaft, weil sie eine kompakte Bauform des Sensors ermöglicht, die vor allem eine bauhöhenoptimierte Sende- und Empfangseinheit erlaubt. Zugleich wird das Einstellen oder Justieren der Signaldynamik erleichtert, vor allem im Nahbereich, während einfache optische Bauelemente verwendet werden können.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines Laserscanners mit in zwei Dimensionen gekrümmter Frontscheibe;
- Fig. 2: ein Schnitt durch eine Ausführungsform der Frontscheibe des Laserscanners gemäß Figur 1 senkrecht zu dessen Überwachungsebene;
- Fig. 3: eine dreidimensionale Ansicht einer Ausführungsform der Frontscheibe des Laserscanners gemäß Figur 1;
- Fig. 4: eine dreidimensionale Darstellung einer Frontscheibe und der Elemente der Testlichtpfade sowie des Strahlengangs eines ersten Testlichtpfades;
- Fig. 5: eine dreidimensionale Darstellung der Frontscheibe gemäß Figur 4 mit dem Strahlengang eines dritten Testlichtpfades;
- Fig. 6: eine Draufsicht auf die Frontscheibe gemäß Figur 4 zur Erläuterung der Anordnung der Reflektoren und der dadurch bewirkten Abbildung des Testlichts;
- Fig. 7: eine dreidimensionale Darstellung der Frontscheibe gemäß Figur 4 mit dem Strahlengang eines vierten Testlichtpfades;
- Fig. 8: eine dreidimensionale Darstellung der Frontscheibe gemäß Figur 4 mit dem Strahlengang eines fünften Testlichtpfades;
- Fig. 9: eine dreidimensionale Darstellung der Frontscheibe gemäß Figur 4 mit dem Strahlengang eines ersten Referenzlichtpfades;
- Fig. 10: eine dreidimensionale Darstellung der Frontscheibe gemäß Figur 4 mit dem Strahlengang eines zweiten Referenzlichtpfades; und
- Fig. 11: eine vereinfachte Schnittdarstellung durch den Laserscanner gemäß Figur 1 und des Strahlengangs eines Frontscheibenreflexes zur Erläuterung einer Beschlagsmessung anhand des Frontscheibenreflexes.

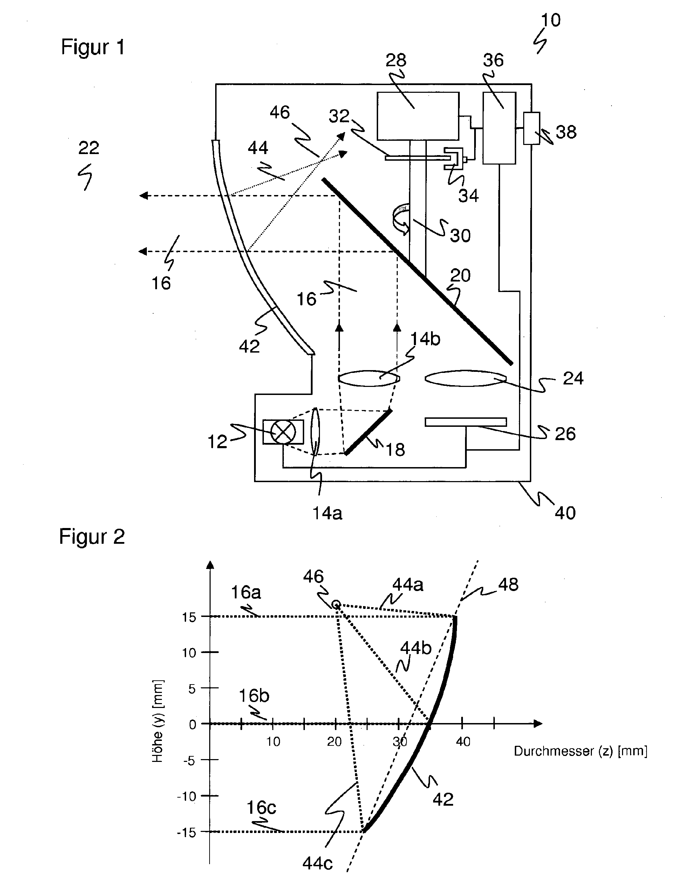

Fig. 1 zeigt eine schematische Schnittdarstellung durch einen optoelektronischen Sensor 10, der als Laserscanner ausgebildet ist. Ein Lichtsender 12, beispielsweise mit einer Laserlichtquelle, erzeugt mit Hilfe von Sendeoptiken 14a, 14b einen Sendelichtstrahl 16 mit einzelnen kurzen Lichtimpulsen. Alternativ arbeitet der Sensor 10 anstelle eines Pulsverfahrens mit dem einleitend beschriebenen Phasenverfahren. Der Sendelichtstrahl 16 wird mittels eines Umlenkspiegels 18 und einer Ablenkeinheit 20 in eine

Überwachungsebene 22 ausgesandt. Anstelle eines Umlenkspiegels 18 kann auch ein Polarisationsteiler eingesetzt werden. Überhaupt kann die Einkopplung des Sendelichtstrahls 16 in den Sendelichtweg über die Ablenkeinheit 20 auf alternative, an sich bekannte Weise erfolgen, beispielsweise mit nur einer Sendeoptik oder mit direktem Lichtweg ohne Umlenkspiegel 18.

Der Sendelichtstrahl 16 wird in der Überwachungsebene 22 von dort gegebenenfalls vorhandenen Objekten remittiert und kehrt dann, je nach optischen Eigenschaften der Objektoberfläche abgeschwächt und/oder aufgestreut, zumindest teilweise als remittierter Lichtstrahl zu dem Sensor 10 zurück. Dort trifft der remittierte Lichtstrahl erneut auf die Ablenkeinheit 20 und wird durch eine Empfangsoptik 24 auf einen Lichtempfänger 26 geleitet, beispielsweise eine Photodiode. Wie schon für Lichtsender 12 und Sendeoptik 14a-b erläutert, ist auch die Ausprägung und Anordnung der Empfangsoptik 24 sowie die Lage des Lichtempfängers 26 rein beispielhaft zu verstehen. Es sind diverse alternative Ausgestaltungen möglich, etwa eine mit der Ablenkeinheit 20 mitbewegte Empfangsoptik, eine Empfangsoptik aus mehreren Linsen, eine Strahlformung des remittierten Lichtstrahls bereits vor Auftreffen auf die Ablenkeinheit 20 und dergleichen.

Die Ablenkeinheit 20 ist als Drehspiegel ausgestaltet, der durch Antrieb eines Motors 28 kontinuierlich rotiert. Dadurch überstreicht der Sendelichtstrahl 16 mit der Rotationsbewegung eine Überwachungsebene, die senkrecht zur Drehachse 30 steht. In einer alternativen Ausführungsform ist eine zusätzliche Verkippung der Drehachse 30 denkbar, um einen dreidimensionalen Raumabschnitt als Überwachungsbereich 22 zu erfassen. Als Überwachungsebene wird in diesem Fall die Mittenebene des Raumabschnitts bezeichnet.

Die Anordnung von Lichtsender 12 und Lichtempfänger 26 ist in dieser Ausführungsform nicht koaxial. Dadurch fällt der Sendelichtstrahl 16 nicht zentral, sondern im Verlauf der Drehbewegung in unterschiedlichen Höhen auf die Ablenkeinheit 20. Dies führt zu einer Auf- und Abbewegung des Sendelichtstrahls 16, deren Ausmaß vom Abstand der optischen Achse des Lichtsenders 12 zu der Drehachse 30 abhängt. In einer alternativen Ausführungsform sind Lichtsender 12 und Lichtempfänger 26 koaxial angeordnet, beispielsweise mit Hilfe eines Strahlteilers, und die Auf- und Abbewegung des Sendelichtstrahls 16 entfällt.

Mit dem Sensor 10 kann ein Sichtwinkel von bis zu 270° überwacht werden. Zusätzlich zu den dargestellten Elementen kann in einem rückwärtigen Bereich ein Referenzziel vorgesehen sein, um die Funktion des Lichtsenders 12 zu testen. Dies ist eine beispielhafte Möglichkeit, um eine der Anforderungen der einleitend genannten Sicherheitsnormen zu erfüllen, mit denen der Sensor 10 ein sicherer Sensor wird. Prinzipiell erlaubt der dargestellte Optikaufbau auch einen größeren Sichtwinkel von bis zu 360°.

Die jeweilige Winkelstellung der Ablenkeinheit 20 wird über einen Encoder erfasst, der beispielsweise eine Codescheibe 32 und eine Gabellichtschranke 34 umfasst. Alternative Messverfahren für eine Winkelstellung sind möglich. Der von dem Lichtsender 12 erzeugte Sendelichtstrahl 16 überstreicht somit die durch die Rotationsbewegung erzeugte Überwachungsebene 22. Wird ein von dem Lichtempfänger 26 empfangener remittierter Lichtstrahl aus der Überwachungsebene 22 empfangen, so kann aus der Winkelstellung der Ablenkeinheit 20 mittels des Encoders 32, 34 auf die Winkellage des Objektes in der Überwachungsebene 22 geschlossen werden.

Zusätzlich wird die Laufzeit der einzelnen Laserlichtpulse von ihrem Aussenden bis zu dem Empfang nach Reflexion an dem Objekt in der Überwachungsebene 22 ermittelt. Aus der Lichtlaufzeit wird unter Verwendung der Lichtgeschwindigkeit auf die Entfernung des Objektes von dem Sensor 10 geschlossen. Diese Auswertung erfolgt in einer Auswertungseinheit 36, die dafür mit dem Lichtsender 12, dem Lichtempfänger 26, dem Motor 28 und dem Encoder 32, 34 verbunden ist. Somit stehen über den Winkel und die Entfernung zweidimensionale Polarkoordinaten der Positionen aller Objekte in der Überwachungsebene 22 zur Verfügung.

Speziell in sicherheitstechnischen Anwendungen ist Ziel der Auswertung, ein Sicherheitssignal an einem Sicherheitsausgang 38 (OSSD, Output Signal Switching Device) bereitzustellen, beispielsweise um einen Nothalt einer angeschlossenen Maschine auszulösen. In dieser Anwendung werden vorzugsweise auch die einleitend genannten Maßnahmen eingehalten, um die einschlägigen Sicherheitsnormen zu erfüllen. Über die Winkel- und Entfernungsdaten berechnet die Auswertungseinheit 36 den Ort eines Objektes in der Überwachungsebene 22. Dies wird mit einem zweidimensionalen Schutzfeld verglichen, dessen Geometrie durch entsprechende Parameter in einem Speicher der Auswertungseinheit 36 abgelegt ist. Damit erkennt die Auswertungseinheit 36, ob das Schutzfeld verletzt ist, also ob sich ein unzulässiges Objekt darin befindet und schaltet je nach Ergebnis den Sicherheitsausgang 38. Je nach Ausführungsform ist denkbar, die Auswertung oder Teile der Auswertung statt in einer internen Auswertungseinheit 36 in einer übergeordneten Steuerung vorzunehmen.

Alle genannten Funktionskomponenten sind in einem Gehäuse 40 angeordnet, das frontseitig, also im Bereich des Lichtaus- und Lichteintritts, eine Frontscheibe 42 aufweist. Diese Frontscheibe 42 ist gekrümmt ausgebildet, so dass an der Innenseite reflektiertes Licht 44 in einem Fokusbereich 46 gebündelt wird. In der Situation der Figur 1 handelt es sich dabei um einen Frontscheibenreflex des Sendelichtstrahls 16. Die Fokussierung wirkt aber ebenso auf anderen Strahlungswegen, beispielsweise auf einem dem Sendelichtstrahl 16 im Wesentlichen entgegen gerichteten Strahlungsweg.

Figur 2 zeigt einen Schnitt der Frontscheibe 42 in einer Richtung senkrecht zu der Überwachungsebene 22. Dabei ist auf der X-Achse der Durchmesser der Frontscheibe 42 und auf der Y-Achse deren Höhe aufgetragen. Die Frontscheibe 42 ist eine Freiformfläche, deren Kontur sich in dem dargestellten Schnitt in praktisch jede gewünschten Genauigkeit durch einen Polynom- oder Asphärenfit annähern lässt. Durch die besondere Krümmung wird erreicht, dass an der Innenseite der Frontscheibe 42 reflektiertes Licht 44a-c unabhängig von der Höhenlage der Reflexion auf der Frontscheibe 42 in einem gemeinsamen Fokusbereich 46 gebündelt wird. Der Fokusbereich 46 liegt vorzugsweise oberhalb beziehungsweise in gespiegelter Anordnung unterhalb der Ablenkeinheit 20. Dies wird dadurch erreicht, dass sich die Kontur der Frontscheibe 42 insgesamt nach außen oder innen neigt. Jede Sekante 48 der Kontur ist also gegenüber einer Vertikalen verkippt.

Die Frontscheibe 42 ist vorzugsweise über ihre gesamte Höhe gekrümmt, wobei die Krümmung monoton zu- oder abnimmt. Dadurch nimmt die jeweilige Verkippung des betroffenen infinitesimalen Frontscheibenstücks entsprechend zu oder ab, so dass mit zunehmendem Abstand zu einem unteren oder oberen Höhenniveau eine stärkere Ablenkung erfolgt. Dazu eignen sich verschiedene Konturen, beispielsweise parabolische, hyperbolische, elliptische oder allgemeine asphärische Verläufe.

Die Darstellung der Figuren 1 und 2 zeigen jeweils einen Schnitt senkrecht zu der Überwachungsebene 22 bei einer festen Winkelstellung der Ablenkeinheit 20. Um das definierte Wegspiegeln des Frontscheibenreflexes 44 auch in unterschiedlichen Winkelstellungen zu erreichen, wird die Frontscheibe 42 vorzugsweise als Rotationskörper ausgebildet, welche die erforderliche Krümmung in jeder Winkelstellung aufweist, also in jedem senkrechten Schnitt zu der Überwachungsebene 22 durch die Drehachse 30.

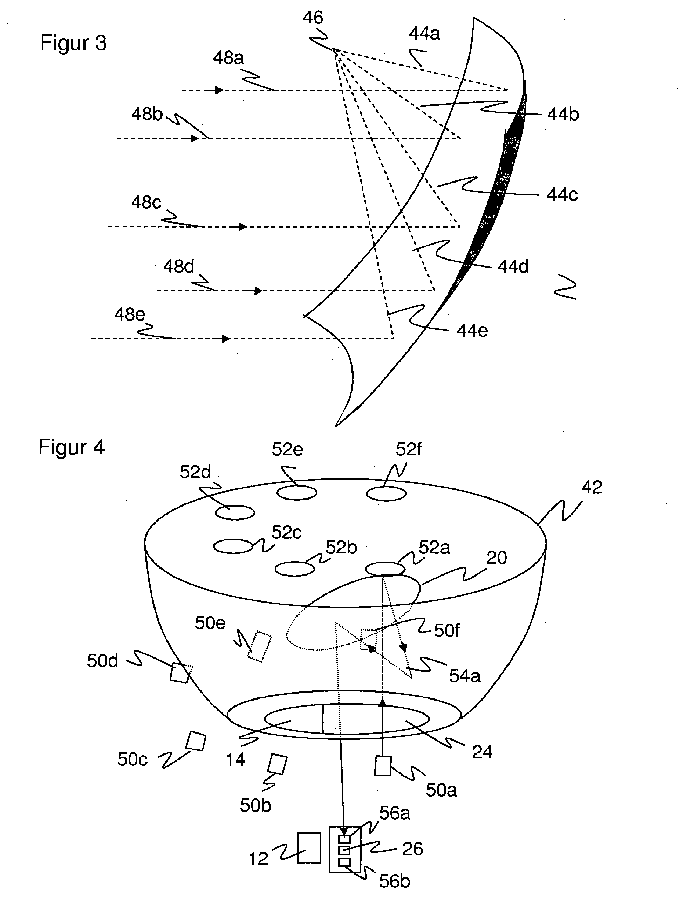

Figur 3 zeigt einen dreidimensionalen Ausschnitt einer solchen als Rotationskörper ausgebildeten Frontscheibe 42, einige beispielhaft in unterschiedlicher Höhe und mit unterschiedlichem lateralem Versatz auftreffende einfallende Lichtstrahlen 48a-e und entsprechendes an der Innenseite der Frontscheibe 42 reflektiertes Licht 44a-e. Dabei bewirkt die Krümmung der Frontscheibe 42 in Höhenrichtung und in Umfangsrichtung, dass sich das reflektierte Licht 44a-e des dargestellten Ausschnitts in einem Punkt oder zumindest in einem eng begrenzten Bereich treffen. Bei zusätzlichen Winkelstellungen, demnach einem größeren Winkelausschnitt als dem dargestellten, wird daraus ein umlaufender ringförmiger Fokusbereich 46 in derselben Höhenebene. Insgesamt wird die Frontscheibe 42 als dreidimensionaler Körper kelchförmig.

Figur 4 zeigt eine dreidimensionale Ansicht der Frontscheibe 42 sowie weitere bereits beschriebene Elemente des Sensors 10, nämlich den Lichtsender 12 mit Sendeoptik 14, den Lichtempfänger 26 mit Empfangsoptik 24 und die Ablenkeinheit 20. Die Darstellung von Sendeoptik 14 und Empfangsoptik 24 ist vereinfacht, hier können auch andere und komplexere optische Elemente eingesetzt werden.

Um die Lichtdurchlässigkeit der Frontscheibe 42 zu überprüfen, sind eine Vielzahl von hier beispielhaft sechs Testlichtsendern 50a-f in Umfangsrichtung verteilt. Dabei wird ein in Winkelausschnitt, in der Figur 4 rechts dargestellt, als Totbereich der Abtastung ausgelassen. Prinzipiell sind aber auch Sensoren mit einem kleineren oder gar keinem Totbereich denkbar, bei denen dann die Testlichtsender 50a-f über einen entsprechend größeren Winkelbereich verteilt werden.

Den Testlichtsendern 50a-f sind Reflektoren 52a-f zugeordnet, die ebenfalls in Umfangsrichtung verteilt in einer Ebene parallel zu der Überwachungsebene 22 angeordnet sind. Dabei handelt es sich vorzugsweise um Retroreflektoren, denn an sich alternativ denkbare Spiegelelemente müssten genau ausgerichtet werden, und diffus streuende Elemente würden zwar wegen der Krümmung der Frontscheibe 42 zu einer im Wesentlichen gleichen Abbildung führen, könnten aber schwer kontrollierbares Streulicht erzeugen. Zum besseren Verständnis der Perspektive in der Figur 4 sollte beachtet werden, dass dort die Ebene der Reflektoren 52a-f oberhalb der Frontscheibe liegt. Entgegen dem ersten Anschein sind also die Reflektoren 52a-f in etwa symmetrisch zu der Mittenachse angeordnet.

Der in einer willkürlichen Nummerierung entgegen dem Uhrzeigersinn erste Testlichtsender 50a ist so ausgerichtet, dass sein Testlicht nach Transmission der Frontscheibe 42 auf den zugehörigen Reflektor 52a trifft. Der erste Testlichtpfad 54a geht dann nach Reflexion an dem Reflektor 52a mit einer teilweisen Reflexion innen an den beiden Grenzflächen der Frontscheibe 42 weiter zu der Ablenkeinheit 20 und schließlich durch die Empfangsoptik 24 zu einem Testlichtempfänger 56a in der Ebene des Lichtempfängers 26. Dabei erfolgt eine Fokussierung an der gekrümmten Frontscheibe 42 und an der Empfangsoptik 24. Figur 4 zeigt als Testlichtpfad nur einen Hauptlichtweg, wegen der genannten Fokussierungseigenschaften werden benachbarte Lichtstrahlen entsprechend abgebildet. Die Ablenkeinheit 20 ist dem ersten Testlichtsender 50a während des Tests durch den ersten Testlichtsender 50a zugewandt. Um dies sicherzustellen, kann die Aktivität der Testlichtsender 50a-f mit der Drehbewegung der Ablenkeinheit 20 synchronisiert werden. Anhand des Signals des Testlichtempfängers 56a kann die Auswertungseinheit 36 die Lichtdurchlässigkeit der Frontscheibe 42 bewerten und gegebenenfalls ein Wartungssignal beziehungsweise ein sicherheitsgerichtetes Abschaltsignal ausgeben.

Den Testlichtsendern 50a-f ist vorzugsweise eine nicht dargestellte Optik vorgeordnet, wie Blenden oder Linsen, oder es werden Lichtquellen verwendet, die einen bereits kollimierten Lichtstrahl bereitstellen. Optische Elemente, insbesondere Linsen dieser Optiken können mit einem Sockel der Frontscheibe 42 einstückig ausgebildet sein, etwa durch eingespritzte Linsen. Eine Fokussierung des Testlichts auf dem Reflektor 52a-f ist insbesondere bei hellen Stäuben sinnvoll, weil die Messung durch gestreutes Licht an den hellen Staubpartikeln gestört werden kann. Streuung an hellen Partikeln wirkt sich vor allem dann störend auf die Messung aus, wenn der energetische Anteil des Lichtstrahls gering ist, der auf den Reflektor 52a-f fällt. Durch Wahl der Optiken und die Ausrichtung der Testlichtsender 50a-f kann die Position, an welcher das Testlicht die Frontscheibe 42 durchdringt, und der Strahlquerschnitt optimal eingestellt werden. Dabei kann die Frontscheibe 42 auch mit einer größeren Fläche durchstrahlt werden. Die Fokussierungseigenschaften durch die Krümmung der Frontscheibe 42 und die Empfangsoptik 24 in dem Testlichtpfad 54a-f sorgen dennoch für eine Bündelung auf dem Testlichtempfänger 56a-b.

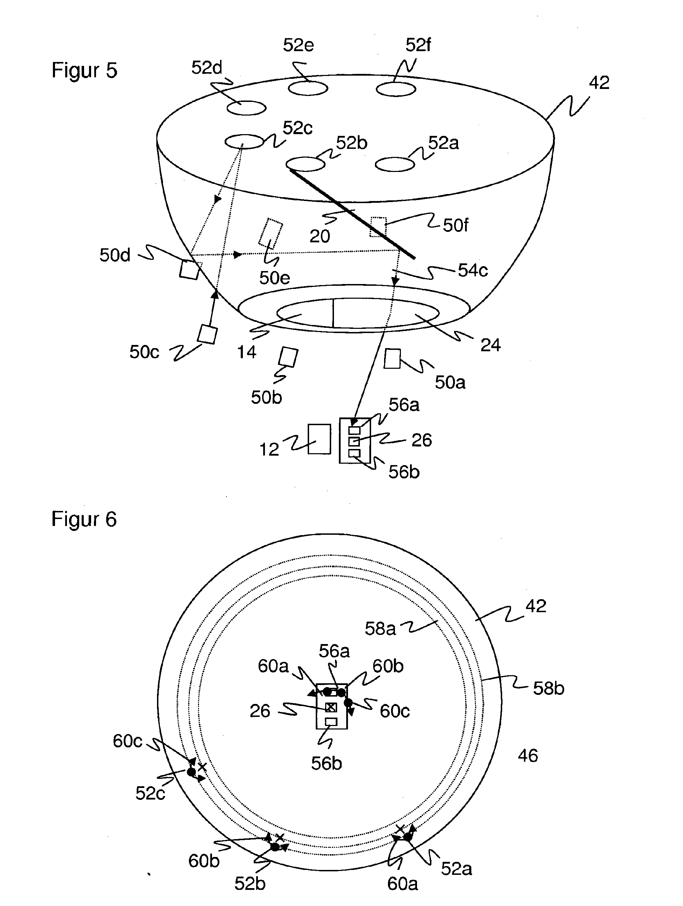

Figur 5 zeigt nochmals die Frontscheibe 42, nun aber mit dem Testlichtpfad 54c des dritten Testlichtsenders 50c und zugehörigen Reflektors 52c. Die Ablenkeinheit 20 hat sich gedreht und ist nun dem dritten Testlichtsender 50c zugewandt. Das Testlicht wird auch auf dem dritten Testlichtpfad 54c in den gleichen Testlichtempfänger 56a abgebildet. Eine entsprechende Darstellung für den von dem zweiten Testlichtsender 54b ausgehenden zweiten Testlichtpfad 54b wurde weggelassen, da diese Situation bereits aus den Figuren 4 und 5 klar wird. Somit genügt ein gemeinsamer Testlichtempfänger 56a für mehrere, in dem gezeigten Beispiel drei Testlichtpfade 54a-c.

Um dies besser zu verstehen, zeigt Figur 6 die Frontscheibe 42 ein weiteres Mal in der Draufsicht. Mit einer gestrichelten Linie ist der umlaufende Fokusbereich 46 illustriert. Zwei Hilfslinien 58a-b zeigen die umlaufenden möglichen Positionen eines radialen Versatzes gegenüber dem Fokusbereich 46. Die Reflektoren 52a-c sind auf der Fokusebene parallel zu und oberhalb der Überwachungsebene 22 in Umfangsrichtung verteilt angeordnet. Die Positionierung erfolgt mit einem leichten Versatz gegenüber einer jeweils mit einem x bezeichneten Position in dem Fokusbereich 46. Diese mit x bezeichnete Position wird auf den Lichtempfänger 24 abgebildet.

Würde man die Reflektoren 52a-c nun wie durch schwarze Punkte dargestellt mit einem Versatz nur in radialer Richtung gegenüber der mit x bezeichneten Position anordnen, so würden sie entsprechend der bogenförmigen Anordnung in Positionen 60a-c zumindest zum Teil neben dem Testempfangselement 56a abgebildet. Deshalb erhalten die Reflektoren 52a-c zusätzlich noch einen Winkelversatz gegenüber der radialen Richtung, wie durch Pfeile 60a-c angedeutet. Bei geeigneter Wahl des jeweiligen Winkelversatzes werden die Reflektoren 52a-c nach Fresnelreflexion an der inneren und äußeren Grenzfläche der Frontscheibe 42 durch deren Krümmung und die Empfangsoptik 24 scharf neben dem Lichtempfänger 26 abgebildet, und zwar an der gleichen Stelle in der Ebene des Lichtempfängers 26, so dass das von den Reflektoren 52a-c reflektierte Testlicht in demselben Testempfangselement 56a ausgewertet werden kann. Die Anordnung der Reflektoren 52a-f sollte vorzugsweise so gewählt sein, dass auch durch den Winkelversatz kein Reflektor 52a-f in dem Fokusbereich 46 liegt, denn ansonsten würde Testlicht in den Lichtempfänger 26 gelangen. Wenn man den Frontscheibenreflex in einer optischen Falle in dem Fokusbereich 46 absorbieren möchte, können in diesem Bereich ohnehin nicht zugleich noch Reflektoren 52a-f angebracht werden.

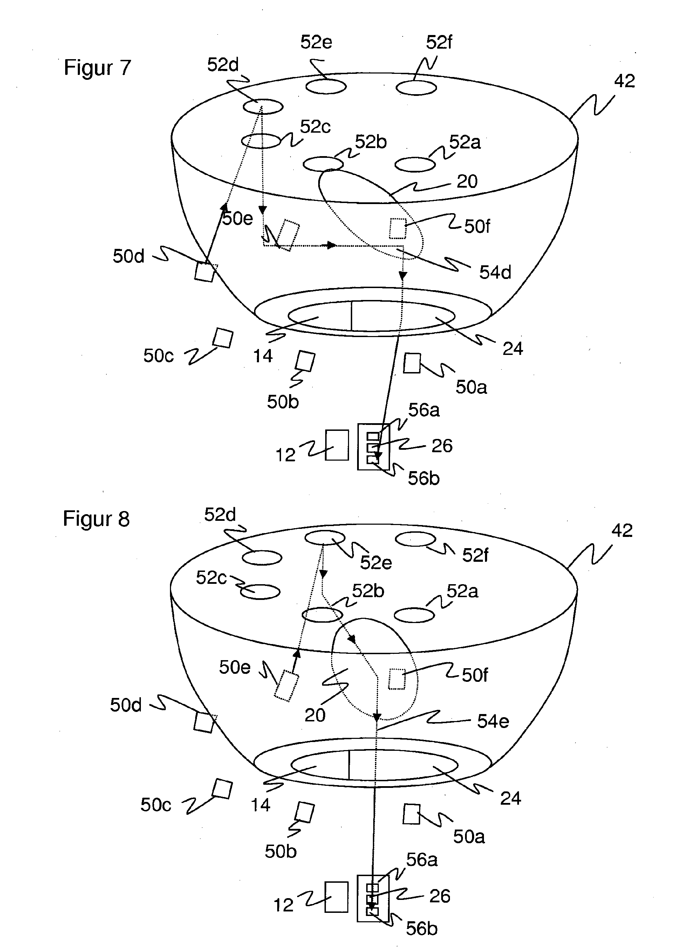

Die Figuren 7 und 8 zeigen eine der Figur 4 entsprechende dreidimensionale Ansicht der Frontscheibe 42 mit einem vierten Testlichtpfad 54d und einem fünften Testlichtpfad 54e. Eine entsprechende Darstellung für einen sechsten Testlichtpfad 54f wurde weggelassen, da dessen Verlauf bereits aus den Figuren 7 und 8 klar wird. Wie schon auf den ersten bis dritten Testlichtpfaden 54a-c gelangt das Testlicht auch auf den vierten bis sechsten Testlichtpfaden 54d-f auf einen gemeinsamen Testlichtempfänger 56b. Die Erklärung anhand einer vertikal gespiegelten Figur 6 wird hier nicht wiederholt.

Somit werden für die Lichtdurchlässigkeitsmessung der Frontscheibe an sechs Stellen mit sechs Testlichtpfaden 54a-f nur zwei Testlichtempfänger 56a-b benötigt. Da sich die Testlichtempfänger 56a-b nahe beieinander in derselben Ebene befinden, können sie auf einer gemeinsamen Platine untergebracht werden. Dies kann sogar die Platine des ebenfalls auf der gleichen Ebene befindlichen Lichtempfängers 26 sein.

Wenn für den Sendelichtstrahl 16 der eigentlichen Messung des Sensors 16 und für das Testlicht unterschiedliche Modulationen oder Spektralbereiche verwendet werden, kann die Auswertungseinheit 36 dies unterscheiden, so dass auch in den Lichtempfänger eingestreutes Testlicht nicht stört.

Es ist sogar denkbar, durch eine solche Unterscheidbarkeit gänzlich auf Testlichtempfänger 56a-b zu verzichten und den Lichtempfänger 26 in einer Doppelfunktion auch für die Durchlässigkeitsmessung der Frontscheibe 42 zu verwenden. Dazu werden die Reflektoren 52a-f in einer Ausführungsform gezielt ohne Versatz in dem Fokusbereich 46 angeordnet. Wie in Figur 6 zu erkennen führt dies dazu, dass die Reflektoren 52a-f direkt in den Lichtempfänger 26 abgebildet werden. Dabei werden Reflektoren 52a-f verwendet, die selektiv nur das Testlicht reflektieren, weil ansonsten auf diesem Weg auch Anteile des Sendelichtstrahls 16 als Störlicht in den Lichtempfänger 26 gelangen könnten.

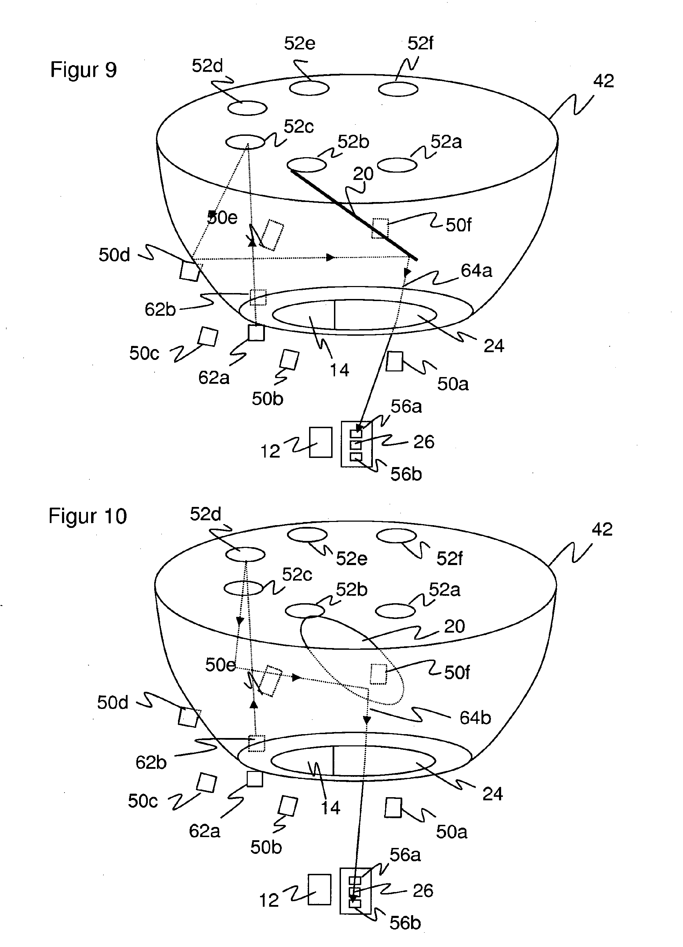

Die Figuren 9 und 10 zeigen nochmals die Frontscheibe 42 in einer dreidimensionalen Darstellung zur Erläuterung von Referenzlichtsendern 62a-b und Referenzlichtpfaden 64a-b. Eine Verschmutzung der Frontscheibe 42 ist nämlich nicht die einzige denkbare Ursache für eine Änderung des Signals der Testlichtempfänger 56a-b, sondern auch Temperatureinflüsse, Alterungserscheinungen und ähnliche Gründe. Um dies herauszurechnen, wird das Signal auf den Referenzlichtpfaden 64a-bestimmt, die sich von den Testlichtpfaden 54a-f dadurch unterscheiden, dass die Frontscheibe 42 gerade nicht transmittiert wird. Dazu sind die Referenzlichtsender 62a-b unterhalb, oberhalb oder im Inneren der Frontscheibe 42 angeordnet. Obwohl es möglich ist, eigene Referenzreflektoren und Referenzlichtempfänger zu verwenden, werden in der dargestellten beispielhaften Ausführungsform bereits vorhandene Reflektoren 52c-d verwendet, und die Referenzlichtpfade 64a-b führen durch entsprechende Anordnung und Orientierung der Referenzlichtsender 62a-b auf die Testlichtempfänger 56a-b. Das hat nicht nur den Vorteil, dass Bauelemente eingespart werden. Darüber hinaus werden so die Effekte der tatsächlich von dem Testlicht genutzten Bauelemente kompensiert und nicht wie sonst üblich nur baugleiche Elemente.

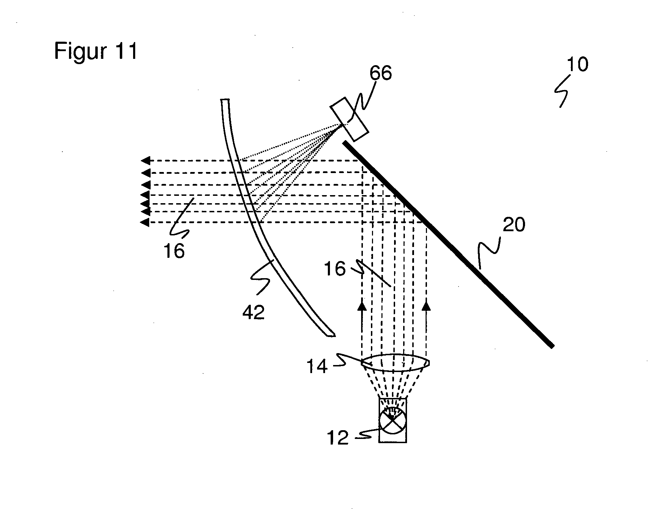

Figur 11 zeigt in einer Schnittdarstellung den Strahlengang des Sendelichtstrahls 16 bis zu einem Frontscheibenreflex. Dieser Strahlengang ist im Wesentlichen die Umkehrung eines Testlichtpfades 54a-f. Der Frontscheibenreflex wird im Fokusbereich 46 mit einem Beschlagstestempfänger 66 gemessen. Genaugenommen entstehen in der Ebene des Fokusbereichs 46 zu jedem Winkel zwei Lichtflecken aufgrund des Frontscheibenreflexes, nämlich an der inneren und der äußeren Grenzfläche der Frontscheibe 42. Ist nun die Frontscheibe 42 von außen mit einer Flüssigkeit benetzt, etwa Öl oder Wasser, wie dies bei Beschlagbildung der Fall ist, so wird der entsprechende Reflex an der äußeren Grenzfläche wegen des geringeren Brechzahlgradienten gedämpft. Auf diese Weise kann aus einer Bewertung des Frontscheibenreflexes von der äußeren Grenzfläche eine Beschlagbildung detektiert werden.

## Patentansprüche

1. Optoelektronischer Sensor (10), insbesondere Laserscanner, mit einer umlaufenden Frontscheibe (42), die sowohl in Umlaufrichtung als auch in einer Höhenrichtung quer zu der Umlaufrichtung eine Krümmung und dadurch einen umlaufenden Fokusbereich (46) aufweist, in dem an der Innenseite der Frontscheibe (42) gespiegeltes Licht gebündelt wird, mit mindestens einem Testlichtsender (50a-f), mindestens einem Reflektor (52a-f) und mindestens einem Testlichtempfänger (56a-b), welche einen Testlichtpfad (54a-f) aufspannen, auf dem Testlicht von dem Testlichtsender (50a-f) durch die Frontscheibe (42) zu dem Reflektor (52a-f) und anschließend in den Testlichtempfänger (56a-b) gelangt, und wobei eine Auswertungseinheit (36) vorgesehen ist, um anhand eines Abfalls eines von dem Testlicht in dem Testlichtempfänger (56a-b) erzeugten Signals eine nachlassende Lichtdurchlässigkeit der Frontscheibe (42) zu erkennen, **dadurch gekennzeichnet,**
**dass** der Testlichtempfänger (56a-b) derart auf derselben Seite der Frontscheibe (42) angeordnet ist wie der Reflektor (52a-f), dass der Testlichtpfad (54a-f) von dem Reflektor (52a-f) über eine Reflexion an der Innenseite der Frontscheibe (42) zu dem Testlichtempfänger (56a-b) führt.

2. Sensor (10) nach Anspruch 1,
der einen Lichtsender (12) zum Aussenden eines Sendelichtstrahls (16) in eine Überwachungsebene (22), einen Lichtempfänger (26) zum Erzeugen eines Empfangssignals aus dem von Objekten in der Überwachungsebene (22) remittierten Lichtstrahl und eine um eine Drehachse drehbare Ablenkeinheit (20) zur periodischen Ablenkung des Sendelichtstrahls (16) aufweist, um im Verlauf der Drehung die Überwachungsebene (22) abzutasten, wobei die Auswertungseinheit (36) weiterhin dafür ausgebildet ist, aus dem Empfangssignal Informationen über Objekte in der Überwachungsebene (22) zu gewinnen.

3. Sensor (10) nach Anspruch 2,
wobei der Testlichtempfänger (56a-b) nahe der Drehachse und mit seiner optischen Achse parallel dazu so angeordnet ist, dass der Testlichtpfad (54a-f) von der Innenseite der Frontscheibe (42) über die Ablenkeinheit (20) zu dem Testlichtempfänger (56a-b) führt.

4. Sensor (10) nach Anspruch 3,
wobei die Auswertungseinheit (36) dafür ausgebildet ist, den Testlichtsender (50a-f) mit der Drehung synchronisiert zu aktivieren.

5. Sensor (10) nach einem der Ansprüche 2 bis 4,
wobei dem Lichtempfänger (26) eine Empfangsoptik (24) vorgeordnet ist und die Empfangsoptik (24) auch Teil des Testlichtpfades (54a-f) zwischen Ablenkeinheit (20) und Testlichtempfänger (56a-b) ist.

6. Sensor (10) nach einem der vorhergehenden Ansprüche,
wobei der Reflektor (52a-f) bei dem Fokusbereich (46) der Frontscheibe (42) angeordnet ist, jedoch einen Versatz zu dem Fokusbereich (46) aufweist.

7. Sensor (10) nach einem der vorhergehenden Ansprüche,
wobei eine Vielzahl von Reflektoren (52a-f) vorgesehen ist, die auf einer Ebene parallel zu der Überwachungsebene (22) in Umfangsrichtung verteilt angeordnet sind, wobei jeder Reflektor (52a-f) einen Versatz zu dem Fokusbereich (46) und gegenüber der radialen Richtung zu dem Fokusbereich (46) einen unterschiedlichen Winkelversatz aufweist, so dass das von mehreren Reflektoren (52a-f) reflektierte Testlicht über die Frontscheibe (42) auf einen gemeinsamen Testlichtempfänger (56a-b) geführt wird.

8. Sensor (10) nach einem der vorhergehenden Ansprüche,
wobei der Testlichtsender (50a-f) eine Testlichtsenderoptik aufweist, und wobei die Testlichtsenderoptik einstückig mit einem Sockel der Frontscheibe (42) ausgebildet ist, insbesondere indem Linsen in den Sockel eingespritzt sind.

9. Sensor (10) nach einem der vorhergehenden Ansprüche,
wobei mehrere Testlichtempfänger (56a-b) auf derselben Platine untergebracht sind, insbesondere auf der Platine des Lichtempfängers (26).

10. Sensor (10) nach einem der vorhergehenden Ansprüche,
wobei der Lichtsender (12) und der Testlichtsender (50a-f) dafür ausgebildet sind, Licht mit voneinander unterscheidbaren Modulations- oder Spektraleigenschaften auszusenden.

11. Sensor (10) nach einem der vorhergehenden Ansprüche,
wobei der Reflektor (52a-f) für Testlicht selektiv und in dem Fokusbereich (46) angeordnet ist, und wobei der Lichtempfänger (26) zugleich als Testlichtempfänger (56a-b) ausgebildet ist.

12. Sensor (10) nach einem der vorhergehenden Ansprüche,
wobei mindestens ein Referenzlichtsender (62a-b) derart angeordnet ist, dass sein Referenztestlicht auf einen zugehörigen Reflektor (52c-d) trifft, ohne die Frontscheibe (42) zu durchdringen.

13. Sensor (10) nach einem der vorhergehenden Ansprüche,
wobei in dem Fokusbereich (46) mindestens ein Beschlagtestempfänger (66) angeordnet ist, und wobei die Auswertungseinheit (36) dafür ausgebildet ist, anhand eines Abfalls eines von der Frontscheibe (42) in den Beschlagtestempfänger (66) reflektierten Anteils eines Sendelichtstrahls (16) des Sensors (10) eine Beschlagbildung auf der Frontscheibe (42) zu erkennen.

14. Sensor (10) nach einem der vorhergehenden Ansprüche,
der als Sicherheitsscanner mit einem Sicherheitsausgang (38) ausgebildet ist, indem in der Auswertungseinheit (36) bestimmbar ist, ob sich ein Objekt in einem Schutzfeld innerhalb der Überwachungsebene (22) befindet, und daraufhin ein sicherheitsgerichtetes Abschaltsignal über den Sicherheitsausgang (38) ausgebbar ist.

15. Verfahren zum Testen der Lichtdurchlässigkeit einer umlaufenden Frontscheibe (42) eines optoelektronischen Sensors (10), insbesondere eines Laserscanners, wobei Testlicht auf einem Testlichtpfad (54a-f) von mindestens einem Testlichtsender (50a-f) durch die Frontscheibe (42) zu mindestens einem zugeordneten Reflektor (52a-f) und anschließend in einen Testlichtempfänger (56a-b) gelangt, und wobei anhand eines Abfalls eines von dem Testlicht in dem Testlichtempfänger (56a-b) erzeugten Signals eine nachlassende Lichtdurchlässigkeit der Frontscheibe (42) erkannt wird,
**dadurch gekennzeichnet,**
**dass** das Testlicht nach Reflexion an dem Reflektor (52a-f) an einer Innenseite der Frontscheibe (42) partiell gespiegelt und dabei zugleich aufgrund von einer Krümmung der Frontscheibe (42) sowohl in Umlaufrichtung als auch in einer Höhenrichtung quer zu der Umlaufrichtung gebündelt wird, ehe es auf derselben Seite der Frontscheibe (42) wie der Reflektor (52a-f) in dem Testlichtempfänger (56a-b) erfasst wird.

## Claims

1. An optoelectronic sensor (10), in particular a laser scanner, having a circumferential front screen (42) comprising a curvature both in a circumferential direction and in a height direction transverse to the circumferential direction and thus having a circumferential focus area (46) in which light reflected at the inside of the circumferential front screen (42) is focused, having at least one test light transmitter (50a-f), at least one reflector (52a-f), and at least one test light receiver (56a-b) forming a test light path (54a-f) on which test light passes from the test light transmitter (50a-f) through the front screen (42) to the reflector (52a-f) and subsequently onto the test light receiver (56a-b), and wherein an evaluation unit (36) is provided in order to detect a decreasing light transmissivity of the front screen (42) based on a decrease of a signal generated by the test light in the test light receiver (56a-b),
**characterized in that**
the test light receiver (56a-b) is arranged on a same side of the front screen (42) as the reflector (52a-f) such that the test light path (54a-f) leads from the reflector (52a-f) via a reflection on the inside of the front screen (42) to the test light receiver (56a-b).

2. The sensor (10) according to claim 1,
comprising a light transmitter (12) for transmitting a transmission light beam (16) into a monitoring plane (22), a light receiver (26) for generating a reception signal from a remitted light beam remitted from objects in the monitoring area (22) and a deflection unit (20) rotatable around a rotational axis for periodically deflecting the transmission light beam (16) in order to scan the monitoring plane (22) in the course of the rotation, wherein the evaluation unit (36) is further configured to obtain information about objects in the monitoring plane (22) from the reception signal.

3. The sensor (10) according to claim 2,
wherein the test light receiver (56a-b) is arranged near the rotational axis and with its optical axis parallel thereto so that the test light path (54a-f) passes from the inside of the front screen (42) via the deflection unit (20) to the test light receiver (56a-b).

4. The sensor (10) according to claim 3,
wherein the evaluation unit (36) is configured to activate the test light transmitter (50a-f) synchronized with the rotation.

5. The sensor (10) according to any of claims 2 to 4,
wherein reception optics (24) are arranged in front of the light receiver (26), and wherein the reception optics (24) are also part of the test light path (54a-f) between deflection unit (20) and test light receiver (56a-b).

6. The sensor (10) according to any of the preceding claims,
wherein the reflector (52a-f) is arranged near the focus area (46) of the front screen (42) with an offset to the focus area (46).

7. The sensor (10) according to any of the preceding claims,
comprising a plurality of reflectors (52a-f) which are arranged in a circumferential distribution in a plane parallel to the monitoring plane (22), wherein each reflector (52a-f) has an offset to the focus area (46) and a differing angle offset relative to a radial direction to the focus area (46) so that the test light reflected by the plurality of reflectors (52a-f) is guided via the front screen (42) to a common test light receiver (56a-b).

8. The sensor (10) according to any of the preceding claims,
wherein the test light transmitter (50a-f) comprises test light transmission optics, and wherein the test light transmission optics are integrally formed with a socket of the front screen (42), in particular by molding of lenses into the socket.

9. The sensor (10) according to claim any of the preceding claims,
wherein a plurality of test light receivers (56a-b) are arranged on a same circuit board, in particular the circuit board of the light receiver (26).

10. The sensor (10) according to any of the preceding claims,
wherein the light transmitter (12) and the test light transmitters (50a-f) are configured to transmit light with distinguishable modulation properties or spectral properties.

11. The sensor (10) according to any of the preceding claims,
wherein the reflector (52a-f) is selective for test light and is arranged in the focus area (46), and wherein the light receiver is also configured as a test light receiver (56a-b).

12. The sensor (10) according to any of the preceding claims,
wherein at least one reference light transmitter (62a-b) is arranged so that its reference test light impinges on a corresponding reflector (52c-d) without transmitting the front screen (42).

13. The sensor (10) according to any of the preceding claims,
wherein at least one fogging test receiver (66) is arranged in the focus area (46), and wherein the evaluation unit (36) is configured to detect a fogging of the front screen (42) from a decrease of a part of a transmission light beam (16) of the sensor (10) which is reflected into the fogging test receiver (66) by the front screen (42).

14. The sensor (10) according to any of the preceding claims,
the sensor (10) being configured as a safety laser scanner with a safety output (38) by the evaluation unit (36) being configured to determine whether an object is present in a protected area within the monitoring plane (22) and to thereupon output a safety-related shut-down signal via the safety output (38).

15. A method for testing a light transmissivity of a circumferential front screen (42) of an optoelectronic sensor (10), in particular a laser scanner, wherein test light passes on a test light path (54a-f) from at least one test light transmitter (50a-f) through the front screen (42) to at least one corresponding reflector (52a-f) and subsequently onto a test light receiver (56a-b), and wherein a decreasing light transmissivity of the front screen (42) is detected from a decrease of a signal generated in the test light receiver (56a-b) by the test light,
**characterized in that**
the test light is partially reflected at the inside of the front screen (42) after reflection at the reflector (52a-f) and is at the same time focussed due to a curvature of the front screen (42) both in a circumferential direction and a height direction transverse to the circumferential direction, wherein the test light is subsequently detected on the same side of the front screen (42) as the reflector (52a-f) in the test light receiver (56a-b).

## Revendications

1. Capteur optoélectronique (10), en particulier scanner à laser, comprenant une vitre frontale (42) en rotation, qui présente une courbure aussi bien en direction de rotation que dans une direction verticale perpendiculaire à la direction de rotation et présente de ce fait une zone focale (46) en rotation, dans laquelle la lumière réfléchie sur la face intérieure de la vitre frontale (42) est focalisée, comprenant au moins un émetteur de lumière test (50a-f), au moins un réflecteur (52a-f) et au moins un récepteur de lumière test (56a-b), qui définissent un trajet de lumière test (54a-f) sur lequel la lumière test venant de l'émetteur de lumière test (50a-f) traverse la vitre frontale (42) vers le réflecteur (52a-f) et parvient enfin dans le récepteur de lumière test (56a-b), et dans lequel il est prévu une unité d'évaluation (36) afin de reconnaître, au moyen d'une chute d'un signal engendré par la lumière test dans le récepteur de lumière test (56a-b), une diminution de la perméabilité à la lumière de la vitre frontale (42),
**caractérisé en ce que**
le récepteur de lumière test (56a-b) est agencé sur le même côté de la vitre frontale (42) que le réflecteur (52a-f) de telle manière que le trajet de lumière test (54a-f) mène, en venant du réflecteur (52a-f), via une réflexion au niveau de la face intérieure de la vitre frontale (42), au récepteur de lumière test (56a-b).

2. Capteur (10) selon la revendication 1,
qui comprend un émetteur de lumière (12) pour émettre un rayon de lumière émise (16) vers un plan de surveillance (22), un récepteur de lumière (26) pour engendrer un signal de réception à partir du rayon de lumière réémis par des objets dans le plan de surveillance (22), et une unité de déflexion (20), en rotation autour d'un axe de rotation, pour défléchir périodiquement le rayon de lumière émise (16), afin de palper le plan de surveillance (22) au cours de la rotation, dans lequel l'unité d'évaluation (36) est en outre réalisée pour récupérer à partir du signal de réception des informations concernant des objets dans le plan de surveillance (22).

3. Capteur (10) selon la revendication 2,
dans lequel le récepteur de lumière test (56a-b) est agencé à proximité de l'axe de rotation et avec son axe optique parallèle à celui-ci de telle façon que le trajet de lumière test (54a-f) mène depuis la face intérieure de la vitre frontale (42) via l'unité de déflexion (20) jusqu'au récepteur de lumière test (56a-b).

4. Capteur (10) selon la revendication 3,
dans lequel l'unité d'évaluation (36) est réalisée pour activer l'émetteur de lumière test (50a-f) de manière synchronisée avec la rotation.

5. Capteur (10) selon l'une des revendications 2 à 4,
dans lequel une optique de réception (24) est agencée en avant du récepteur de lumière (26), et l'optique de réception (24) fait aussi partie du trajet de lumière test (54a-f) entre l'unité de déflexion (20) et le récepteur de lumière test (56a-b).

6. Capteur (10) selon l'une des revendications précédentes,
dans lequel le réflecteur (52a-f) est agencé vers la zone focale (46) de la vitre frontale (42), mais présente un décalage par rapport à la zone focale (46).

7. Capteur (10) selon l'une des revendications précédentes,
dans lequel il est prévu une pluralité de réflecteurs (52a-f), qui sont agencés sur un plan parallèle au plan de surveillance (22) de manière répartie en direction périphérique, dans lequel chaque réflecteur (52a-f) présente un décalage par rapport à la zone focale (46) et un décalage angulaire différent par rapport à la zone focale (46) vis-à-vis de la direction radiale, de sorte que la lumière test réfléchie par plusieurs réflecteurs (52a-f) est menée via la vitre frontale (42) vers un récepteur de lumière test (56a-b) commun.

8. Capteur (10) selon l'une des revendications précédentes,
dans lequel l'émetteur de lumière test (50a-f) comprend une optique d'émission de lumière test, et dans lequel l'optique d'émission de lumière test est réalisée d'un seul tenant avec un socle de la vitre frontale (42), en particulier du fait que des lentilles sont injectées dans le socle.

9. Capteur (10) selon l'une des revendications précédentes,
dans lequel plusieurs récepteurs de lumière test (56a-b) sont logés sur la même platine, et en particulier sur la platine du récepteur de lumière (26).

10. Capteur (10) selon l'une des revendications précédentes,
dans lequel l'émetteur de lumière (12) et l'émetteur de lumière test (50a-f) sont réalisés pour émettre une lumière avec des propriétés de modulation ou des propriétés spectrales différentes l'un de l'autre.

11. Capteur (10) selon l'une des revendications précédentes,
dans lequel le réflecteur (52a-f) est sélectif pour la lumière test et agencé dans la zone focale (46), et dans lequel le récepteur de lumière (26) est réalisé simultanément comme récepteur de lumière test (56a-b).

12. Capteur (10) selon l'une des revendications précédentes,
dans lequel au moins un émetteur de lumière de référence (62a-b) est agencé de telle façon que sa lumière test de référence tombe sur un réflecteur associé (52c-d) sans traverser la vitre frontale (42).

13. Capteur (10) selon l'une des revendications précédentes,
dans lequel au moins un récepteur test de buée (66) est agencé dans la zone focale (46), et dans lequel l'unité d'évaluation (36) est réalisée pour reconnaître, au moyen d'une chute d'une part, réfléchie par la vitre frontale (42) vers le récepteur test de buée (66), d'un rayon de lumière émise (16) du capteur (16), une formation de buée sur la vitre frontale (42).

14. Capteur (10) selon l'une des revendications précédentes,
qui est réalisé comme un scanner de sécurité avec une sortie de sécurité (38) et dans lequel il est possible de déterminer dans l'unité d'évaluation (36) si un objet se trouve dans un champ protégé à l'intérieur du plan de surveillance (22) et suite à cela, un signal de coupure à fonction de sécurité est susceptible d'être délivré via la sortie de sécurité (38).

15. Procédé pour tester la perméabilité à la lumière d'une vitre frontale en rotation (42) d'un capteur optoélectronique (10), en particulier d'un scanner à laser, dans lequel une lumière test parvient, sur un trajet de lumière test (54a-f), en venant d'au moins un émetteur de lumière test (50a-f) et en traversant la vitre frontale (42), à au moins un réflecteur associé (52a-f) et ensuite dans un récepteur de lumière test (56a-b), et dans lequel on reconnaît, au moyen d'une chute d'un signal engendré par la lumière test dans le récepteur de lumière test (56a-b), une diminution de la perméabilité à la lumière de la vitre frontale (42), **caractérisé en ce que**
après réflexion sur le réflecteur (52a-f), la lumière test est partiellement réfléchie sur une face intérieure de la vitre frontale (42) et est ici focalisée simultanément en raison d'une courbure de la vitre frontale (42) aussi bien en direction de rotation que dans une direction verticale perpendiculaire à la direction de rotation, avant d'être reçue dans le récepteur de lumière test (56a-b) sur le même côté de la vitre frontale (42) que le réflecteur (52a-f).
